# EUROPÄISCHE PATENTANMELDUNG

(11) **EP 3 797 895 A1**
(43) Veröffentlichungstag der Anmeldung: **31.03.2021**
(21) Anmeldenummer: 20207509.9
(22) Anmeldetag: 22.12.2017
(51) Int. Cl.: B22C 1/16, B22C 1/22, B22C 9/12, C08G 18/54, C08G 18/76, C08G 18/18, C08G 8/36

(54) **PHENOLHARZE VOM BENZYLETHERTYP ENTHALTEND FREIES PHENOL UND FREIE HYDROXYBENZYLALKOHOLE UND BINDEMITTEL AUF DEREN BASIS**

(30) Priorität: 23.12.2016 DE 102016125700
(62) Teilanmeldung aus: 17835802.4
(71) Anmelder: ASK Chemicals GmbH, 40721 Hilden (DE)
(72) Erfinder: Priebe, Christian, 42489 Wülfrath (DE); Schneider, Philipp, 40231 Düsseldorf (DE); Stancliff, Mark, Worcestershire, WR6 5PP (GB); Weaver, Brian, Worcestershire, DY13 9NZ (GB)
(74) Vertreter: Müller Schupfner & Partner Patent- und Rechtsanwaltspartnerschaft mbB

(57) **Zusammenfassung**

Gegenstand der Erfindung ist ein Phenolharz vom Benzylethertyp, ein Bindemittel auf Basis von Phenolharzen vom Benzylethertyp und Isocyanat-Verbindungen mit zumindest zwei Isocyanat-Gruppen enthaltend in der Polyol-Komponente freies Phenol und freie Hydroxybenzylalkohole. Weiterhin betrifft die Erfindung Formstoffmischungen enthaltend das Bindemittel und mit den Formstoffmischungen hergestellte Kerne, Formen oder Speiser sowie deren Verwendung im Metallguss.

## Beschreibung

### Einleitung

Die vorliegende Erfindung betrifft Phenolharze vom Benzylethertyp, ein Bindemittel auf Basis von Phenolharzen vom Benzylethertyp und Isocyanat-Verbindungen mit zumindest zwei Isocyanat-Gruppen enthaltend in der Polyol-Komponente freies Phenol und ein oder mehrere freie Hydroxybenzylalkohole in einem bestimmten Verhältnis zueinander zum Einsatz in Phenolharz-Polyurethan-Cold Box-Verfahren (PUCB-Verfahren) und/oder Phenolharz-Polyurethan-No Bake-Verfahren (PUNB-Verfahren). Weiterhin betrifft die Erfindung Formstoffmischungen enthaltend das Bindemittel und mit den Formstoffmischungen hergestellte Kerne, Formen oder Speiser sowie deren Verwendung im Metallguss.

### Hintergrund der Erfindung und allgemeiner Stand der Technik

Die Herstellung von Kernen und Formen nach dem PUCB- und/oder nach dem PUNB-Verfahren hat in der Gießereiindustrie große Bedeutung erlangt. Zur Bindung eines feuerfesten Formgrundstoffes werden dabei Zwei-Komponenten-Polyurethan-Systeme eingesetzt. Die Polyol-Komponente besteht aus einem Polyol mit mindestens zwei OH-Gruppen pro Molekül, die Isocyanat-Komponente aus einem Isocyanat mit mindestens zwei NCO-Gruppen pro Molekül. Als Polyolkomponente werden u.a. Phenol-Formaldehyd-Harze eingesetzt. Die Aushärtung des Gemischs aus Formgrundstoff und Bindemittel, kurz auch Formstoffmischung genannt, erfolgt beim PUCB-Verfahren mit Hilfe von niedrigsiedenden tertiären Aminen, die nach der Formgebung gasförmig oder als Aerosol durch die Formstoffmischung geleitet werden (vergleiche US 3409579). Üblicherweise erfolgt dies mit Hilfe eines Trägergases, z.B. Luft, Stickstoff oder CO₂, in das zumindest ein tertiäres Amin eindosiert wird. Beim PUNB-Verfahren erfolgt eine Zugabe von flüssigen tertiären Aminen und/oder Metallverbindungen als Katalysator zur Formstoffmischung.

Bisherige Phenolharze vom Benzylethertyp (bezogen auf das reine Phenolharz, ohne Lösemittel und Additive), hergestellt aus Phenol als alleinigem phenolischen Grundkörper und Formaldehyd, weisen typischerweise Restphenolgehalte von 4,0 bis 18,0 Gew.% (freies Phenol) und einen Gehalt von freien Hydroxybenzylalkoholen von 4,2 bis 17,9 Gew. % auf, wobei der Gehalt an freien Hydroxybenzylalkoholen stets niedriger ist als der an freiem Phenol. Die Hydroxybenzylalkohole umfassen ortho-Hydroxybenzylalkohol (Saligenin), meta-Hydroxybenzylalkohol und/oder para-Hydroxybenzylalkohol (Homosaligenin). Ist nachfolgend auf den Gehalt an Hydroxybenzylalkoholen (egal ob im Singular oder Plural) Bezug genommen, ist die Summe an ortho-Hydroxybenzylalkohol, meta-Hydroxybenzylalkohol und para-Hydroxybenzylalkohol gemeint.

Bisherige Phenolharze vom Benzylethertyp (bezogen auf das Phenolharz, ohne Lösemittel und Additive), hergestellt aus Phenol und o-Kresol als phenolische Grundkörper und Formaldehyd weisen typischerweise Restphenolgehalte von 3,0 bis 12,0 Gew.%, Restkresolgehalte von 2,0 bis 6,0 Gew.% und Hydroxybenzylalkohol-Gehalte von 3,2 bis 11,9 Gew.% auf, wobei der Hydroxybenzylalkohol-Gehalt stets niedriger ist als der Phenol-Gehalt.

Die DE 102015107016.2 lehrt in den Beispielen der Tabelle 1, dass der Saligenin-Gehalt eines beispielhaften Phenolharzes vom Benzylethertyp aus Phenol und Formaldehyd einen höheren freien Phenolgehalt als freies Saligenin aufweist. Das Gewichtsverhältnis Phenol zu Saligenin bzw. zu den Hydroxybenzylalkoholen ist immer 1 : kleiner 1. Die US 4205188 beschreibt die gezielte Herstellung von Saligenin aus Phenol und Formaldehyd in alkalischer Umgebung. Durch einen Überschuss an Phenol wird ein Lösungsmittelextraktionsverfahren angewandt, um das nicht umgesetzte Phenol wieder zu entfernen.

### Aufgabe der Erfindung

Aufgabe der Erfindung ist es, ein Bindemittel basierend auf Phenolharzen vom Benzylethertyp zur Verfügung zu stellen, das Festigkeiten und die Heißfestigkeit von mit dem Bindemittel hergestellten Sandkernen verbessert.

### Zusammenfassung der Erfindung

Die Aufgabe konnte durch den Gegenstand der unabhängigen Patentansprüche gelöst werden. Vorteilhafte Weiterbildungen sind Gegenstand der Unteransprüche oder nachfolgend beschrieben.

Gegenstand der Erfindung ist somit ein Phenolharz vom Benzylethertyp, wobei das Phenolharz vom Benzylethertyp durch eines oder beide der nachfolgenden Merkmale gekennzeichnet ist:
a) das Phenolharz vom Benzylethertyp enthält freies Phenol und freien Hydroxybenzylalkohol und das Gewichtsverhältnis von freiem Phenol zu freiem Hydroxybenzylalkohol beträgt 1 zu größer als 1,2;
b) das Phenolharz vom Benzylethertyp enthält freies Phenol und freies Saligenin und das Gewichtsverhältnis von freiem Phenol zu freiem Saligenin beträgt 1 zu größer als 1,1.

Die Polyol-Komponente ist ein Phenolharz vom Benzylethertyp.

Gegenstand der Erfindung ist somit weiterhin ein Bindemittel enthaltend Phenolharze vom Benzylethertyp mit definiertem Phenol- oder Hydroxybenzylalkohol-Verhältnis und Isocyanate zur Verfügung zu stellen. Überraschend wurde festgestellt, dass die Verschiebung der Monomere hin zur ersten Additionsstufe des aromatischen Phenolrings mit Formaldehyd, die Festigkeiten und Deformationsneigung verbessert. Dieses ist insofern überraschend, da z.B. die Hydroxybenzylalkohole (bei katalytischer Aktivierung) über die -CH₂OH Gruppe bevorzugt mit Isocyanat reagieren und diese eigentlich zu einem Kettenabbruch führen. Diese Beobachtung ist überraschend, weil Hydroxybenzylalkohole als Kettenabbrecher für die Polyadditionsreaktion mit Diisocyanat gelten, und damit verbunden geringere Festigkeiten und eine verschlechterte Heißfestigkeit zu erwarten sind.

Weiterhin betrifft die Erfindung Formstoffmischungen enthaltend das Bindemittel auf Basis von Phenolharzen vom Benzylethertyp, feuerfesten Formgrundstoff und Isocyanate und ggf. Katalysatoren und aus den Formstoffmischungen nach Härtung hergestellte Kerne, Formen und Speiser. Auch Gegenstand der Erfindung ist die Verwendung der Kerne, Formen und Speiser für den Metallguss, insbesondere den Eisen-sowie Aluminiumguss.

Die Erfindung ist nachfolgend in Form von Gegenständen dargestellt:
1. Bindemittel zum Aushärten von Formstoffmischungen aufweisend zumindest:
   - eine Polyol-Komponente, wobei die Polyol-Komponente ein Phenolharz vom Benzylethertyp ist;
   - eine Isocyanat-Komponente aus einem oder mehreren Isocyanat-Verbindungen mit zumindest 2 Isocyanat-Gruppen pro Molekül; wobei
      das Bindemittel weiter durch eines oder beide der nachfolgenden Merkmale gekennzeichnet ist:
      a) das Bindemittel enthält freies Phenol und freien Hydroxybenzylalkohol und das Gewichtsverhältnis von freiem Phenol zu freiem Hydroxybenzylalkohol beträgt 1 zu größer als 1,2;
      b) das Bindemittel enthält freies Phenol und freies Saligenin und das Gewichtsverhältnis von freiem Phenol zu freiem Saligenin beträgt 1 zu größer als 1,1.
2. Formstoffmischung enthaltend zumindest:
   - einen feuerfesten Formgrundstoff;
      und als Bindemittel
   - eine Polyol-Komponente, wobei die Polyol-Komponente ein Phenolharz vom Benzylethertyp ist;
   - eine Isocyanat-Komponente aus einem oder mehreren Isocyanat-Verbindungen mit zumindest 2 Isocyanat-Gruppen pro Molekül; wobei
      die Formstoffmischung weiter durch eines oder beide der nachfolgenden Merkmale gekennzeichnet ist:
      a) die Formstoffmischung enthält freies Phenol und freien Hydroxybenzylalkohol und das Gewichtsverhältnis von freiem Phenol zu freiem Hydroxybenzylalkohol beträgt 1 zu größer als 1,2;
      b) die Formstoffmischung freies Phenol und freies Saligenin und das Gewichtsverhältnis von freiem Phenol zu freiem Saligenin beträgt 1 zu größer als 1,1.
3. Bindemittel bzw. Formstoffmischung nach zumindest einem der vorhergehenden Gegenstände, wobei das Gewichtsverhältnis von freiem Phenol zu freiem Hydroxybenzylalkohol
   - 1 zu 1,2 bis 1 zu 30,
   - bevorzugt 1 zu 1,3 bis 1 zu 20 und
   - besonders bevorzugt 1 zu 1,6 bis 1 zu 15 und
   - ganz besonders bevorzugt 1 zu 1,8 bis 1 zu 13
   beträgt.
4. Bindemittel bzw. Formstoffmischung nach zumindest einem der vorhergehenden Gegenstände, wobei das Gewichtsverhältnis von freiem Phenol zu freiem Saligenin (o-Hydroxybenzylalkohol)
   - 1 zu 1,1 bis 1 zu 25,
   - bevorzugt 1 zu 1,2 bis 1 zu 15 und
   - besonders bevorzugt 1 zu 1,5 bis 1 zu 10
   - ganz besonders bevorzugt 1 zu 1,8 bis 1 zu 8
   beträgt.
5. Bindemittel bzw. Formstoffmischung nach zumindest einem der vorhergehenden Gegenstände, wobei das Phenolharz vom Benzylethertyp, bezogen auf das Gewicht, kleiner als 2,5 Gew.% freies Phenol enthält, vorzugsweise kleiner als 2 Gew.%.
6. Bindemittel bzw. Formstoffmischung nach zumindest einem der vorhergehenden Gegenstände, wobei das Phenolharz vom Benzylethertyp neben freiem Phenol weiterhin freies Kresol und/oder Cardanol und/oder Cardol enthält.
7. Bindemittel bzw. Formstoffmischung nach zumindest einem der vorhergehenden Gegenstände, wobei das Phenolharz vom Benzylethertyp eine OH-Zahl nach DIN 53240 von 500 bis 900 mg KOH/g, vorzugsweise von 550 bis 850 mg KOH/g und insbesondere bevorzugt von 560 bis 750 mg KOH/g aufweist.
8. Bindemittel bzw. Formstoffmischung nach zumindest einem der vorhergehenden Gegenstände, wobei das Phenolharz vom Benzylethertyp ein mittleres Molekulargewicht (Gewichtsmittel nach DIN 5567-1 mittels GPC) von 500 bis 1100 g/mol und insbesondere 550 bis 1000 g/mol und insbesondere bevorzugt von 560 bis 980 g/mol aufweist, ohne Phenol und monomere Additionsprodukte.
9. Bindemittel bzw. Formstoffmischung nach zumindest einem der vorhergehenden Gegenstände, wobei das Lösungsmittel für die Polyolkomponente Dicarbonsäureester und/oder Fettsäureester und vorzugsweise kleiner 10 Gew.% aromatische Lösungsmittel enthält.
10. Bindemittel bzw. Formstoffmischung nach zumindest einem der vorhergehenden Gegenstände, wobei das Bindemittel als Kit vorliegt umfassend getrennt voneinander die Isocyanat-Verbindungen als eine Komponente und das Phenolharz vom Benzylethertyp als weitere Komponente.
11. Bindemittel bzw. Formstoffmischung nach zumindest einem der vorhergehenden Gegenstände, wobei das Bindemittel enthält, auch unabhängig voneinander,
   - 8 bis 70 Gew.%, insbesondere 10 bis 62 Gew.%, Phenolharz vom Benzylethertyp;
   - 13 bis 78 Gew.%, insbesondere 17 bis 70 Gew.%, Isocyanat-Verbindungen; und
   - 2 bis 57 Gew.%, insbesondere 3 bis 53 Gew.%, Lösungsmittel für das Phenolharz vom Benzylethertyp und die Isocyanat-Verbindungen.
12. Formstoffmischung nach zumindest einem der vorhergehenden Gegenstände 2 bis 11, wobei der feuerfeste Formgrundstoff ausgewählt ist aus einem oder mehreren Mitgliedern der Gruppe Olivin, Schamotte, Bauxit, Aluminiumsilikathohlkugeln, Glasperlen, Glasgranulat, synthetischen keramischen Formgrundstoffen und Siliciumdioxid, insbesondere in der Form von Quarzsand, Zirkonsand oder Chromerzsand.
13. Verfahren zur Herstellung eines Formkörpers als Gießform oder als Kern, umfassend
   (i) Herstellen der Formstoffmischung gemäß einem der Gegenstände 2 bis 12;
   (ii) Einbringen der Formstoffmischung oder deren Bestandteile in ein Formwerkzeug;
   (iii) Härten der Formstoffmischung in dem Formwerkzeug mit zumindest einem tertiären Amin, um eine selbsttragende Formkörper zu erhalten; und
   (iv) anschließendes Trennen der gehärteten Form vom Werkzeug und ggf. weiteres Härten, wodurch man einen ausgehärteten Formkörper erhält.
14. Verfahren nach Gegenstand 13, wobei zur Herstellung der Formstoffmischung das Bindemittel als Kit eingesetzt wird umfassend getrennt voneinander zumin-dest die Isocyanat-Verbindungen als eine Komponente und zumindest das Phenolharzvom Benzylethertyp als weitere Komponente.
15. Verfahren nach Gegenstand 13 oder 14 , wobei das tertiäre Amine ausgewählt ist aus einem oder mehreren Mitgliedern aus der Gruppe: Trimethylamin (TMA), Dimethylethylamin (DMEA), Dimethyl-n-propylamin (DMPA), Dimethyl-isopropylamin (DMIPA), Diethylmethylamin (DEMA), Triethylamin (TEA), Trin-propylamin, Tri-isopropylamin, Tri-n-butylamin, Tri-isobutylamin, 4-(C1-C4-Alkyl)pyridine wie Tris(3-dimethylamino)propylamin, Isochinolin, Arylpyridine wie Phenylpyridin, Pyridin, Acridin, 2-Methoxypyridin, Pyridazin, 3-Chloropyridin, Chinolin, N-methylimidazol, N-ethylimidazol, 4,4'-Dipyridin, 4- Phenylpropylpyridin, 1-Methylbenzimidazol und 1,4-Thiazin.
16. Form, Kern oder Speiser hergestellt nach dem Verfahren der Gegenstände 13 bis15.
17. Verwendung der Form oder des Kerns hergestellt nach dem Verfahren der Gegenstände 13, 14 oder 15 zum Metallguss, insbesondere Eisen- oder Aluminium-Guss.

### Detaillierte Beschreibung der Erfindung

Zur Herstellung der Phenolharze vom Benzylethertyp sind alle herkömmlich verwendeten Phenol-Verbindungen geeignet. Neben unsubstituierten Phenolen können substituierte Phenole oder Gemische hiervon eingesetzt werden. Die Phenol-Verbindungen sind vorzugsweise entweder in beiden ortho-Positionen oder in einer ortho- und in der para-Position nicht substituiert. Die verbleibenden Ring-Kohlenstoffatome können substituiert sein. Die Wahl des Substituenten ist nicht besonders beschränkt, sofern der Substituent die Reaktion des Phenols mit dem Aldehyd nicht nachteilig beeinflusst.

Beispiele substituierter Phenole sind alkylsubstituierte, alkoxysubstituierte, arylsubstituierte und aryloxysubstituierte Phenole.

Die grundsätzliche Struktur eines Phenolharzes vom Benzylethertyp weist neben -CH₂- verknüpften Phenol-Einheiten -CH₂-O-CH₂- verknüpfte Phenol-Einheiten auf und lässt sich beispielhaft (in Bezug auf ein nur mit Formaldehyd umgesetztes Produkt) wie folgt darstellen

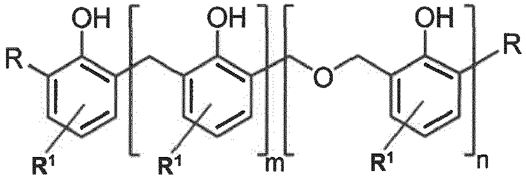

Die unterschiedlichen Einheiten sind typischerweise statistisch verteilt (d.h. auch in anderer Reihenfolge als oben dargestellt verknüpft). Die Phenol-Einheit kann z.T. auch para-verknüpft sein. Hierin ist R¹ jeweils unabhängig (insbesondere von m und n) Wasserstoff oder ein phenolischer Alkyl-Substituent von C1 - C26 (gesättigt oder ungesättigt, geradkettig oder verzweigt) in ortho-, meta- oder paraStellung zur phenolischen Hydroxy-Gruppe; die Summe von m und n beträgt mindestens 2 und das Verhältnis m/n ist mindestens 1; R ist unabhängig Wasserstoff, -CH₂OH oder -CH₂O-R² mit R² = ein C1 bis C9 Kohlenwasserstoff. Der Rest R² kann geradkettig oder verzweigt, gesättigt oder ungesättigt sein.

Die vorstehend genannten Substituenten haben beispielsweise 1 bis 26, bevorzugt 1 bis 15 Kohlenstoffatome. Beispiele geeigneter Phenole sind o-Kresol, m-Kresol, p-Kresol, 3,5-Xylenol, 3,4-Xylenol, 3,4,5-Trimethylphenol, 3-Ethylphenol, 3,5-Diethylphenol, p-Butylphenol, 3,5-Dibutylphenol, p-Amylphenol, Cyclohexylphenol, p-Octylphenol, p-Nonylphenol, Cardanol, 3,5-Dicyclohexylphenol, p-Crotylphenol, p-Phenylphenol, 3,5-Dimethoxyphenol und p-Phenoxyphenol.

Besonders bevorzugt ist Phenol selbst. Auch höher kondensierte Phenole, wie Bisphenol A, sind geeignet. Darüber hinaus eignen sich auch mehrwertige Phenole, die mehr als eine phenolische Hydroxylgruppe aufweisen.

Bevorzugte mehrwertige Phenole weisen 2 bis 4 phenolische Hydroxylgruppen auf. Spezielle Beispiele geeigneter mehrwertiger Phenole sind Brenzkatechin, Resorcin, Hydrochinon, Pyrogallol, Phloroglucin, 2,5-Dimethylresorcin, 4,5-Dimethylresorcin, 5-Methylresorcin, Cardol oder 5-Ethylresorcin. Es können auch Gemische aus verschiedenen ein- und mehrwertigen und/oder substituierten und/oder kondensierten Phenolkomponenten für die Herstellung der Polyolkomponente verwendet werden.

In einer Ausführungsform werden Phenole der allgemeinen Formel I: 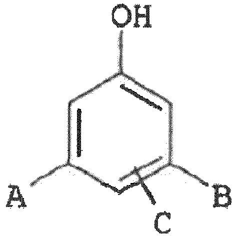 zur Herstellung der Phenol-Formaldehyd-Harzkomponente verwendet, wobei A, B und C unabhängig voneinander ausgewählt sind aus: einem Wasserstoffatom, einem verzweigten oder unverzweigten Alkyl- oder Alkenylrest, der beispielsweise 1 bis 26, vorzugsweise 1 bis 15 Kohlenstoffatome aufweisen kann, einem verzweigten oder unverzweigten Alkoxyrest, der beispielsweise 1 bis 26, vorzugsweise 1 bis 15 Kohlenstoffatome aufweisen kann, einem verzweigten oder unverzweigten Alkenoxyrest, der beispielsweise 1 bis 26, vorzugsweise 1 bis 15 Kohlenstoffatome aufweisen kann, einem Aryl- oder Alkylarylrest, wie beispielsweise Bisphenyle.

Als weiteres Aldehyd zur Herstellung der Phenolharze vom Benzylethertyp eignen sich neben Formaldehyd auch zusätzlich Aldehyde der Formel:

R-CHO

wobei R ein Kohlenstoffatomrest mit 1 bis 3 Kohlenstoffatomen, vorzugsweise einem Kohlenstoffatom ist. Spezielle Beispiele sind Acetaldehyd und Propionaldehyd. Besonders bevorzugt wird Formaldehyd eingesetzt, entweder in seiner wässrigen Form, als para-Formaldehyd oder Trioxan.

Um Phenolharze vom Benzylethertyp zu erhalten, wird vorzugsweise eine mindestens äquivalente Molzahl an Aldehyd-Verbindung, bezogen auf die Molzahl der Phenol-Verbindungen, eingesetzt. Bevorzugt beträgt das Molverhältnis Aldehyd-Verbindung zu Phenol-Verbindung 1,05 : 1,0 bis 2,5 : 1, besonders bevorzugt 1,1 : 1 bis 2,2 : 1, insbesondere bevorzugt 1,2 : 1 bis 2,0 : 1.

Als weitere Reaktionskomponente können nach der EP 0177871 A2 aliphatische Monoalkohole mit ein bis acht Kohlenstoffatomen zugesetzt werden. Durch die Alkoxylierung sollen die Phenol-Formaldehyd-Harze eine erhöhte thermische Stabilität besitzen und eine längere Sandlebenszeit aufweisen.

Die Herstellung des Phenolharzes vom Benzylethertyp erfolgt nach dem Fachmann bekannten Verfahren. Dabei werden das Phenol und das Aldehyd in Gegenwart eines zweiwertigen Metallions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt.

Zur Herstellung von Phenolharzen vom Benzylethertyp geeignete Katalysatoren sind Salze zweiwertiger Ionen von Metallen, wie Mn, Zn, Cd, Mg, Co, Ni, Fe, Pb, Ca und Ba, insbesondere Zn-Salze. Bevorzugt wird Zinkacetat verwendet. Die eingesetzte Menge ist nicht kritisch. Typische Mengen an Metallkatalysator betragen 0,02 bis 0,3 Gew.%, bevorzugt 0,02 bis 0,18 Gew.%, bezogen auf die Gesamtmenge an Phenol-Verbindung und Aldehyd-Verbindung.

Solche Harze sind z.B. in US 3485797 und in EP 1137500 B1 beschrieben, auf deren Offenbarung hiermit sowohl hinsichtlich der Phenolharze vom Benzylethertyp selbst, als auch hinsichtlich ihrer Herstellung ausdrücklich Bezug genommen wird. Analysen dieser Harze zeigen, dass das Gewichtsverhältnis von freiem Phenol (Hydroxybenzol) zu freiem Hydroxybenzylalkohol immer 1 : kleiner 1 liegt.

Die erste Reaktionsstufe der Formaldehyd-Addition, bestehend aus einem Mol Phenol und einem Mol Formaldehyd, bildet Hydroxybenzylalkohole, insbesondere Saligenin. Aufgrund der ortho-ortho dirigierenden Wirkung des Metallkatalysators wird hauptsächlich 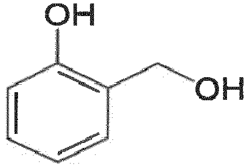 Saligenin (2-Hydroxybenzylalkohol oder o-Hydroxybenzylalkohol) *Mw:124 g*/*mol*
gebildet. Allerdings ist die Bildung von 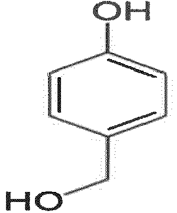 Homosaligenin (4-Hydoxybenzylalkohol oder p-Hydroxybenzylalokohol)
ebenso möglich. Es sind auch Mischungen der Stellungsisomeren möglich, so kann die -CH₂-OH Gruppe an der ortho und ortho, an ortho und para und an ortho, ortho und para Stellung geknüpft sein. In einer weiteren Ausführungsform kann eine, zwei oder drei -CH₂-OH Gruppen mit einem C1 bis C9 Monoalkohol verethert sein. Dieser Monoalkohol kann geradkettig oder verzweigt, gesättigt oder ungesättigt sein.

Das für das Beispiel Phenol genannte gilt auch für den phenolischen Grundkörper o-Kresol und m-Kresol. Mögliche Mischungen von Stellungsisomeren, der -CH₂-OH Gruppe, sind an der ortho oder para und an der ortho und para Stellung. In einer weiteren Ausführungsform kann eine oder zwei -CH₂-OH Gruppen mit einem C1 bis C9 Monoalkohol verethert sein. Dieser Monoalkohol kann geradkettig oder verzweigt, gesättigt oder ungesättigt sein.

Wird als phenolischer Grundkörper Cardanol und/oder Cardol verwendet, so kann die -CH₂-OH Gruppe an der ortho und ortho, an ortho und para und an ortho, ortho und para Stellung geknüpft sein. In einer weiteren Ausführungsform kann eine, zwei oder drei -CH₂-OH Gruppen mit einem C1 bis C9 Monoalkohol verethert sein. Dieser Monoalkohol kann geradkettig oder verzweigt, gesättigt oder ungesättigt sein.

Überraschenderweise wurde nun gefunden, dass ein Verhältnis von freiem Hydoxybenzylalkohol zu freiem Phenol in Phenolharzen vom Benzylethertyp von größer 1, insbesondere größer 1,1, besonders bevorzugt von größer 1,2, die Festigkeiten und die Heißfestigkeit der damit hergestellten Sandkerne verbessert.

Monomere Additionsprodukte sind definiert als die erste Reaktionsstufe eines phenolischen Grundkörpers mit Formaldehyd, wobei bis zu drei Ringwasserstoffe des phenolischen Grundkörpers durch eine -CH₂-OH Gruppe substituiert sein können. Monomere Additionsprodukte auf der Basis von Phenol weisen eine Molmasse von 124 g/mol (Hydroxybenzylalkohol) bis 184 g/mol (Phenol plus bis zu 3 -CH₂OH) auf. Etwaige C1- bis C 26- Alkylreste, die am phenolischen Grundkörper und/oder als Alkylrest an einer veretherten -CH₂-OH Gruppe (Methylolgruppe) gebunden sind, sind nicht in den angegebenen Molgewichten enthalten.

Vorzugsweise wird das Gewichtsverhältnis Phenol zu Hydroxybenzylalkohol von 1:1,2 bis 1:30 bevorzugt von 1: 1,3 bis 1:20, besonders bevorzugt von 1:1,6 bis 1:15 und insbesondere bevorzugt von 1:1,8 bis 1:13 verwendet.

Vorzugsweise wird das Gewichtsverhältnis Phenol zu Saligenin (o-Hydroxybenzylalkohol) von 1:1,1 bis 1:25 bevorzugt von 1: 1,2 bis 1:15, besonders bevorzugt von 1:1,5 bis 1:10 und insbesondere bevorzugt von 1:1,8 bis 1:8 verwendet.

Im Einzelnen meint Gewicht des Phenolharzes vom Benzylethertyp die Summe der Gewichte des Phenolharzes und der zugehörigen (freien) Monomere, wobei das Phenolharz das Umsetzungsprodukt von zumindest einer Formaldehyd-Verbindung und einer Phenol-Verbindung ist, einschließlich polymeranaloger Umsetzungsprodukte, wie z.B. der Alkoxylierung der Endgruppen.

Der freie Phenol-Gehalt beträgt, bezogen auf das Gewicht des Phenolharzes vom Benzylethertyp, vorzugsweise kleiner 3 Gew.%, insbesondere kleiner 2,5 Gew.% oder sogar kleiner 2 Gew.%.

Demzufolge beträgt der Saligenin (o-Hydroxybenzylalkohol)-Gehalt z.B. 2 bis 16 Gew.% oder 1 bis 8 Gew.% und der Hydroxylbenzylalkohol-Gehalt z.B. 2 bis 26 Gew,% oder 1 bis 3 Gew.%, jeweils bezogen auf das Gewicht des Phenolharzes vom Benzylethertyp.

Die Phenolharze vom Benzylethertyp können den erforderlichen Gehalt von freiem Hydroxybenzylalkohol, insbesondere freiem Saligenin, entweder durch Steuerung während oder nach der Bildungsreaktion des Phenolharzes vom Benzylethertyp enthalten oder durch Zugabe von Hydroxybenzylalkohol, insbesondere Saligenin, vor, nach oder während der Bildungsreaktion des Phenolharzes, insbesondere nach der Bildungsreaktion des Phenolharzes.

Auch ist es möglich das Verhältnis von freiem Phenol zu Hydroxybenzylalkohol, insbesondere zu Saligenin, im Phenolharze vom Benzylethertyp dadurch zu steuern, dass das freie Phenol (bevorzugt das freie Phenol) nachträglich aus dem Phenolharz vom Benzylethertyp entfernt wird, z.B. durch Wasserdampfdestillation, Azeotrop-Destillation oder Auslaugen mit Wasser gemäß DIN 53704 und z. B. Filtration. Wenn gewünscht, kann auch nach diesem Schritt eine Zugabe von Hydroxybenzylalkohol, insbesondere Saligenin, erfolgen.

Die Molmasse (HPLC Agilent 11100, RI Detector, PSS SDV-Vorsäule 5µm, PSS SDV-Säule 5µm 1000 Å, PSS SDV-Säule 5µm 100 Å, Flußmittel THF, Säulentemperatur 35°C, Kalibration gegen PSS Polystyrol ReadyCal-Kit low (Mp 266-67500 D, Interner Standard PSS Polystyrol ReadyCal-Kit low (Mp 266-67500 D) des Phenolharzes vom Benzylethertyp, ohne Phenol und ohne monomere Kondensationsprodukte liegt vorzugsweise zwischen 500 und 1100 g/mol, besonders bevorzugt 550 bis 1000 g/mol und insbesondere bevorzugt 560 bis 980 g/mol.

Als weitere Charakterisierung dient die OHZ (Hydroxylzahl, bestimmt nach DIN 53240) des Phenolharzes vom Benzylethertyp zwischen 500 und 900 mg KOH/g, besonders bevorzugt 550 bis 850 mg KOH/g und insbesondere bevorzugt 560 bis 750 mg KOH/g.

Die Isocyanatkomponente des Bindemittelsystems umfasst ein aliphatisches, cycloaliphatisches oder aromatisches monomeres - oder polymeres Isocyanat, bevorzugt mit im Mittel 2 bis 5 Isocyanatgruppen pro Molekül.

Je nach den gewünschten Eigenschaften können auch Gemische von Isocyanaten eingesetzt werden.

Geeignete Isocyanate umfassen aliphatische Isocyanate, wie z.B. Hexamethylendiisocyanat, alicyclische Isocyanate wie z.B. 4,4'-Dicyclohexylmethandiisocyanat und Dimethylderivate hiervon. Beispiele geeigneter aromatischer Isocyanate sind Toluol-2,4-diisocyanat, Toluol-2,6-diisocyanat, 1,5-Naphthalendiisocyanat, Triphenylmethantriisocyanat, Xylylendiisocyanat und Methylderivate hiervon, sowie Polymethylenpolyphenylisocyanate. Bevorzugte Isocyanate sind aromatische Isocyanate, insbesondere bevorzugt sind Polymethylenpolyphenylpolyisocyanate wie z.B. technisches 4,4'-Diphenylmethandiisocyanat, d.h. 4,4'-Diphenylmethandiisocyanat mit einem Anteil an Isomeren und höheren Homologen.

Die Isocyanate können auch derivatisiert sein, indem zweiwertige Isocyanate derart miteinander umgesetzt werden, dass ein Teil ihrer Isocyanatgruppen zu Biuret-, Allophanat-, Uretdion- oder Carbodiimidgruppen derivatisiert ist. Interessant sind z.B. Uretdiongruppen aufweisende Dimerisierungsprodukte, z.B. von MDI oder TDI. Derartige derivatisierte Isocyanate werden vorzugsweise aber nur als ein Bestandteil neben obigen nicht-derivatsierten Isocyanaten eingesetzt.

Bevorzugt wird das Isocyanat in einer Menge eingesetzt, dass die Anzahl der Isocyanatgruppen von 80 bis 120 %, bezogen auf die Anzahl der freien Hydroxylgruppen des Harzes, beträgt.

Die Isocyanat-Komponente des Bindemittelsystems wird bevorzugt als Lösung in einem organischen Lösemittel oder einer Kombination von organischen Lösemitteln eingesetzt. Lösemittel können z.B. deshalb erforderlich sein, um die Komponenten des Bindemittels in einem ausreichend niedrigviskosen Zustand zu halten. Dieser ist u. a. erforderlich, um eine gleichmäßige Vernetzung des feuerfesten Formstoffes und dessen Rieselfähigkeit zu erhalten. Die Begriffe "Lösungsmittel" und "Lösemittel" haben die gleiche Bedeutung.

Die Polyolkomponente bzw. die Isocyanatkomponente des Bindemittelsystems wird bevorzugt als Lösung in einem organischen Lösemittel oder einer Kombination von organischen Lösemitteln eingesetzt.

Lösemittel können z.B. deshalb erforderlich sein, um die Komponenten des Bindemittels in einem ausreichend niedrigviskosen Zustand zu halten. Dieser ist u. a. erforderlich, um eine gleichmäßige Vernetzung des feuerfesten Formstoffes und dessen Rieselfähigkeit zu erhalten.

Als Lösemittel für die Polyolkomponente können z.B. die unter der Bezeichnung Solvent Naphtha bekannten aromatischen Lösemittel eingesetzt werden. Ausgehend von Benzol sind an dem aromatischen Ring unabhängig voneinander Alkyl- und/oder Alkenylgruppen substituiert, welche eine Kettenlänge von C1 bis C30, bevorzugt von C1 bis C20 und insbesondere bevorzugt von C1 bis C16 aufweisen. Unabhängig voneinander können ein bis sechs Ringwasserstoffe des Benzols gegen ein Alkyl- und/oder Alkenylrest substituiert sein, bevorzugt werden 1 bis 4, besonders bevorzugt 1 bis 3 Ringwasserstoffe substituiert. Unabhängig davon kann die Alkyl- oder Alkenylkette geradkettig oder verzweigt sein. Weiterhin können sauerstoffreiche, organische Lösemittel verwendet werden. Geeignet sind vor allem Dicarbonsäureester, Glykoletherester, Glykoldiester, Glykoldiether, cyclische Ketone, cyclische Ester (Lactone), cyclische Carbonate oder Kieselsäureester oder deren Mischungen. Bevorzugt werden Dicarbonsäureester, cyclische Ketone, Kieselsäureester und cyclische Carbonate verwendet.

Typische Dicarbonsäureester weisen die Formel R₁OOC-R₂-COOR₁ auf, wobei R₁ jeweils unabhängig voneinander (insbesondere vom zweiten R₁) eine Alkylgruppe mit 1 bis 12, bevorzugt 1 bis 6, Kohlenstoffatomen darstellt und R₂ eine Kohlenwasserstoffgruppe, geradkettig oder verzweigt, mit 1 bis 7 Kohlenstoffatomen ist. Beispiele sind Dimethylester von Carbonsäuren mit 4 bis 6 Kohlenstoffatomen, die z.B. unter der Bezeichnung Dibasic Ester (DBE) von DuPont erhältlich sind.

Typische Glykoletherester sind Verbindungen der Formel R₃-O-R₄-OOCR₅, wobei R₃ eine Alkylgruppe mit 1 bis 4 Kohlenstoffatomen darstellt, R₄ eine Kohlenwasserstoffgruppe mit 2 bis 4 Kohlenstoffatomen ist und R₅ eine Alkylgruppe mit 1 bis 3 Kohlenstoffatomen ist, z.B. Butylglykolacetat, bevorzugt sind Glykoletheracetate. Typische Glykoldiester weisen entsprechend die allgemeine Formel R₃COO-R₄-OOCR₅ auf, wobei R₃ bis R₅ wie oben definiert sind und die Reste jeweils unabhängig voneinander ausgewählt werden (z.B. Propylenglykoldiacetat). Bevorzugt sind Glykoldiacetate. Glykoldiether lassen sich durch die Formel R₃-O-R₄-O-R₅ charakterisieren, in der R₃ bis R₅ wie oben definiert sind und die Reste jeweils unabhängig voneinander ausgewählt werden (z.B. Dipropylenglykoldimethylether). Typische cyclische Ketone, cyclische Ester und cyclische Carbonate mit 4 bis 5 Kohlenstoffatomen sind ebenfalls geeignet (z.B. Propylencarbonat). Die Kohlenstoffe können verzweigt oder unverzweigt verknüpft sein und gesättigt oder ungesättigt vorliegen.

Geeignet sind auch Fettsäurester R₆-OOCR₇ mit R₇ ein Kohlenwasserstoff von C8 bis 32, und R₆ ein Kohlenwasserstoff von C1 bis C9, insbesondere 1 bis 4, wie z.B. Rapsölfettsäuremethylester, Ölsäurebutylester und Isopropylester diverser Fettsäuren.

Geeignet sind auch Kieselsäureester, in ihrer monomeren Form oder als Oligomer, wie sie aus der WO 2009/130335 A2 bekannt sind. Geeignete Alkyl-/Alkoxy-Silane oder Alkyl-/Alkoxy-Siloxane sind z.B. Ester der Orthokieselsäure, in denen 1, 2 oder 3 Alkoholreste durch substituierte oder unsubstituierte Kohlenwasserstoffreste ersetzt sind, Verbindungen der Formel R¹ₙSi(OR)₄₋ₙ, worin n = 1, 2 oder 3 ist, wobei jede Gruppe R unabhängig von etwaigen weiteren Gruppen R einen organischen Rest bedeutet, bevorzugt verzweigtes oder unverzweigtes C1- bis C30-Alkyl oder Aryl, wie entsprechend in Zusammenhang mit dem ersten Aspekt definiert. R¹ ist hierbei ein substituierter oder unsubstituierter, verzweigter oder unverzweigter Kohlenwasserstoffrest und die Reste R¹ sind im Falle von n = 2 oder 3 gleich oder verschieden. Bevorzugt sind die Reste R¹ substituiertes oder unsubstituiertes, verzweigtes oder unverzweigtes C1- bis C30-Alkyl oder substituiertes oder unsubstituiertes Aryl und besonders bevorzugt substituiertes oder unsubstituiertes, verzweigtes oder unverzweigtes C1- bis C6-Alkyl oder substituiertes oder unsubstituiertes C6 bis C10-Aryl. Am meisten bevorzugt ist unsubstituiertes, verzweigtes oder unverzweigtes C1 bis C6-Alkyl oder unsubstituiertes Phenyl. Methyl, Ethyl und Propyl sind hierin wiederum besonders bevorzugt.

Bevorzugt sind modifizierte Ester ausgewählt aus der Gruppe bestehend aus Tetraalkoxylsilanen, Monoalkyltrialkoxysilanen, Dialkyldialkoxysilanen, Trialkylmonoalkoxysilanen, Monoaryltrialkoxysilanen, Diaryldialkoxysilanen und Triarylmonoalkoxysilanen, wobei die Alkyl- oder Alkoxylgruppengruppen bevorzugt C1 bis C6-Alkylgruppen sind.

Bevorzugt sind modifizierte Ester ausgewählt aus der Gruppe bestehend aus Methyltrimethoxysilan, Methyltriethoxysilan, Methyltripropoxysilan, Methyltributoxysilan, Ethyltrimethoxysilan, Methyltriethoxysilan, Ethyltriethoxysilan, n-Propyltrimethoxysilan, n-Propyltriethoxysilan, Isopropyltrimethoxysilan, Isopropyltriethoxysilan, Vinyltrimethoxysilan, Vinyltriethoxysilan, 3-Glycidoxipropyltrimethoxysilan, 3-Glycidoxypropyltriethoxysilan, 3,4-Epoxycyclohexyl-trimethoxysilan, Dimethoxydimethylsilan, Diethoxydimethylsilan, Diethyldimethoxysilan und Diethyldiethoxysilan.

Besonders bevorzugt sind Tetraethylorthosilikat, Tetrapropylorthosilikat, deren Mischungen und deren Oligomere beziehungsweise Mischungen der Oligomere. Insbesondere bevorzugt sind Tetraethylortho- und Tetrapropylorthosilikat beziehungsweise deren Mischungen.

Als Lösemittel für das Isocyanat werden entweder aromatische Lösemittel, die oben genannten polaren Lösemittel oder Gemische davon eingesetzt. Auch Fettsäureester und Kieselsäureester sind geeignet.

Der Anteil des Lösemittels am Bindemittel kann 2 bis 57 Gew.%, insbesondere 3 bis 53 Gew.% betragen,
Neben den bereits erwähnten Bestandteilen können die Bindemittelsysteme weitere Additive enthalten, z. B. Silane (z.B. gemäß EP 1137500 B1), interne Trennmittel, z. B. Fettalkohole (z.B. gemäß US 4602069), trocknende Öle (z.B. gemäß US 4268425), Komplexbildner (z.B. gemäß US 5447968) und Additive zur Verlängerung der Verarbeitungszeit (z.B. gemäß US 4540724), Fließverbesserer vom Silikontensidtyp oder Gemische davon.

Als feuerfester Formgrundstoff (nachfolgend auch kurz Formgrundstoff) können für die Herstellung von Gießformen übliche und bekannte Materialien sowie deren Mischungen verwendet werden. Geeignet sind beispielsweise Quarz-Sand, ZirkonSand, Chromerzsand, Olivin, Vermiculit, Bauxit, Schamotte sowie sogenannte künstliche Formgrundstoffe, also Formgrundstoffe, die durch industrielle Verfahren der Formgebung in sphärische oder annähernd sphärische (zum Beispiel ellipsoide) Form gebracht wurden.

Beispiele hierfür sind Glasperlen, Glasgranulat oder künstliche, spherische, keramische Sande - sogenannte Cerabeads® aber auch Spherichrome®, SpherOX® oder "Carboaccucast", sowie Mikrohohlkugeln wie sie unter anderem als Komponente aus Flugaschen isoliert werden können, wie z.B. Aluminiumsilikathohlkugeln (sog. Microspheres). Mischungen der genannten Feuerfeststoffe sind ebenfalls möglich.

Besonders bevorzugt sind Formgrundstoffe, die mehr als 50 Gew.% Quarzsand bezogen auf den feuerfesten Formgrundstoff enthalten. Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der feuerfeste Formgrundstoff macht vorzugsweise größer 80 Gew.%, insbesondere größer 90 Gew.%, besonders bevorzugt größer 95 Gew.%, der Formstoffmischung aus.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1:5 oder 1:1 bis 1:3, d.h. solche die z.B. nicht faserförmig sind.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Geeignete Katalysatoren sind tertiäre Amine. Für das PUCB-Verfahren werden flüchtige tertiäre Amine eingesetzt wie Trimethylamin ("TMA", CAS RN 75-50-3), Dimethylethylamin ("DMEA", CAS RN 75-64-9), Dimethyl-n-propylamin ("DMPA", CAS RN 926-63-6), Dimethyl-iso-propylamin ("DMIPA", CAS RN 996-35-0), Diethylmethylamin (DEMA), Triethylamin ("TEA", CAS RN 121-44-8), Trin-propylamin, Tri-isopropylamin, Tri-n-butylamin, Tri-isobutylamin.

Für das PUNB werden flüssige tertiäre Amine eingesetzt. Dies schließt bei Raumtemperatur (25°C) flüssige tertiäre Amine ein als auch solche, welche nach Erwärmen auf z.B. 40° flüssig werden oder solche, die in einem geeigneten Lösungsmittel gelöst sind. Beispiele sind 4-(C1-C4-Alkyl)pyridine wie Tris-(3-dimethylamino)propylamin, Isochinolin. Arylpyridine wie Phenylpyridin, Pyridin, Acridin, 2-Methoxypyridin, Pyridazin, 3-Chloropyridin, Chinolin, N-methylimidazol, N-ethylimidazol, 4,4'-Dipyridin, 4- Phenylpropylpyridin, 1-Methylbenzimidazol und 1,4-Thiazin.

Außerdem betrifft die Erfindung ein Verfahren zur Herstellung der Formstoffmischungen umfassend
(a) Vermischen von feuerfesten Formgrundstoffen mit dem erfindungsgemäßen Bindemittel, in einer Menge von 0,2 bis 12 Gew.%, bevorzugt 0,3 bis 13 Gew.%, besonders bevorzugt 0,4 bis 12 Gew.%, bezogen auf die Menge der feuerfesten Formgrundstoffe, und einen gleichzeitig (beim PUNB Verfahren) oder separat später (beim PUCB-Verfahren) zugesetzten Katalysator zum Erhalt einer Formstoffmischung;
(b) Einbringen der in Schritt (a) erhaltenen Formstoffmischung in ein Formwerkzeug;
(c) ggf. Zusetzen des separat später zugesetzten Katalysators (PUCB) und Härten der Formstoffmischung im Formwerkzeug mit dem erfindungsgemäßen Katalysator, um einen Kern oder eine Gießform zu erhalten; und
(d) anschließendes Trennen des Kerns oder der Gießform vom Werkzeug und ggf. weiteres Härten.

Für die Herstellung der Formstoffmischung können zuerst die Komponenten des Bindemittelsystems vereinigt und dann zu dem feuerfesten Formgrundstoff zugegeben werden. Es ist jedoch auch möglich, die Komponenten des Bindemittels gleichzeitig oder nacheinander in beliebiger Reihenfolge zu dem feuerfesten Formgrundstoff zu geben.

Um eine gleichmäßige Mischung der Komponenten der Formstoffmischung zu erzielen, können übliche Verfahren verwendet werden. Die Formstoffmischung kann zusätzlich gegebenenfalls andere konventionelle Bestandteile, wie Eisenoxid, gemahlene Flachsfasern, Holzmehlgranulate, Pech, Fließverbesserer vom Silikontensidtyp und refraktäre Metalle enthalten.

Erfindungsgemäß kann die Aushärtung nach dem PUCB- oder nach dem PUNB-Verfahren erfolgen. Im Falle des PUCB-Verfahrens wird zum Härten ein niedrigsiedendes tertiäres Amin mittels eines inerten Trägergases gasförmig oder als Aerosol durch die geformte Formstoffmischung geleitet. Die Zugabe eines separaten Katalysators unterbleibt. Es können alle bekannten Cold Box-Aminkatalysatoren verwendet werden.

Im Falle des PUNB-Verfahrens kann der Amin- oder Metallkatalysator bereits im Bindemittel gelöst sein oder als separate Komponente dem Feuerfeststoff zugemischt werden, wobei die Zugabemenge ca. 0,1 Gew.% - ca. 5 Gew.% bezogen auf die Formstoffmischung beträgt.

Die nach diesem Verfahren hergestellten Formkörper können an sich jede auf dem Gebiet der Gießerei übliche Form aufweisen. In einer bevorzugten Ausführungsform liegen die Formkörper in Form von Gießereiformen, Kernen oder Speisern vor. Diese zeichnen sich durch eine hohe mechanische Stabilität aus.

Weiter betrifft die Erfindung die Verwendung dieses Formkörpers für den Metallguss, insbesondere Eisen- sowie Aluminiumguss.

Die Erfindung wird im Weiteren anhand von bevorzugten Ausführungsformen bzw. Versuchsbeispielen näher erläutert, ohne auf diese beschränkt zu sein.

### Versuchsbeispiele

### Eingesetzte Komponenten

Alle Prozent-Angaben meinen Gew. %.

Phenolharz vom Benzylethertyp (o-Kresol/Phenol/Cardanol-Copolymer), welches durch folgende analytische Kennzahlen charakterisiert ist:
Molgewicht (Mw) ca. 900 g/mol, OHZ: ca. 560 mgKOH/g, freier Phenolgehalt: 1,8%, Saligenin Gehalt: 3,8%.
ECOCURE 370/5 PART 1 - Phenolharz vom Benzylethertyp, teilweise mit n-Butanol verethert, Lieferant ASK-Chemicals GmbH, freier Phenolgehalt: 4,5%, Saligenin Gehalt: 3,8%
ISOCYANAT KOMPONENTE: homogene Mischung aus 80% Lupranat M 20 S und 20% RME
KATALYSATOR 706 - Dimethylpropylamin, Lieferant ASK-Chemicals GmbH Quarzsand H 32 - Lieferant Quarzwerke GmbH
MIRATEC DC 3 - wasserbasierte Schlichte, Auslaufzeit 12sec/4mm Becher, Lieferant ASK-Chemicals GmbH
LUPRANAT M 20 S: polymeres MDI, Funktionalität 2,6, Lieferant BASF SE
DBE - Dimethylester Gemisch von C₄-C₆ Dicarbonsäuren, Lieferant DuPont
RME - destillierter Rapsölfettsäuremethylester, Lieferant Cargill
Silan 2201 EQ - Ureidosilan 50%ig in Methanol, Lieferant Evonik Industries Phenol - Lieferant Sigma Aldrich
o-Hydroxybenzylalkohol - Lieferant Sigma Aldrich
p-Hydroxybenzylalkohol - Lieferant Sigma Aldrich

### Messung des Phenol- und Saligenin-Gehalts

Der Phenol- und Saligenin-Gehalt wurde mittels Gaschromatograpie wie nachfolgend beschrieben bestimmt.

### Methodenbeschreibung:

| | |
|---|---|
| Kalibrierung: | Interne Standard-Methode, 7 Punkt- Kalibrierung je zu bestimmende Substanz |
| Interner Standard: | 2,4,6 Trimethylphenol p.A. |
| Standard-Substanzen: | Phenol p.A. und Saligenin (o-Hydroxybenzylalkohol) p.A. |
| Gaschromatograph | Agilent 7890 Plus, mit FID, Kapillarsäule, Autosampler und Agilent-ChemStation |
| Geräteparameter: | |
| Einlasssystem: | Split/Splitless-Injektor, Split 50:1 (79,9ml/min) nach 2 Minuten Laufzeit 20 ml/min |
| | Temperatur: 280°C |
| Trägergas: | Wasserstoff 5.0, Fluss 1 ml/min, Const.-Flow-Methode |
| Kappillarsäule: | HP-5MS, HP 19091S-105, Länge 50 m, |
| | Durchmesser 0,2 mm, Film 0,33µm |
| Temperaturprog.: | 60°C bis 1,5 min; 4,0°C/min bis 140°C null Minuten halten dann 20°C/min bis auf 325 °C, 6 Minuten bei 325 °C halten |
| Detektor: | FID, Temperatur 320°C |
| | Brenngas Wasserstoff 5.0 mit 20 ml/min, Synthetische Luft 5.0 mit 350ml/min, Makeup-Gas: Stickstoff 5.0 mit 25 ml/min |
| Autosampler: | 10µl-GC-Spritze, 1µl dosiert, Fast Injektion Mode |
| Quantifizierung: | Agilent-Chemstation Standard-Einstellung, Interne Standard Methode, Angabe des Ergebnisses in Gew. % |

**Tabelle 1 (Zahlenangaben bedeuten Gew. %)**

| | Vergleich | erfindungsgemäß | | | | | |
|---|---|---|---|---|---|---|---|
| | A1 | B 1 | B 2 | B 3 | B 4 | B 5 | B 6 |
| Phenolharz vom Benzylethertyp | 50 | 50 | 50 | 50 | 50 | 50 | 50 |
| Phenol | 2 | | | | | | |
| DBE | 23,75 | 24,75 | 23,75 | 22,75 | 21,75 | 20,75 | 22,75 |
| RME | 23,75 | 24,75 | 23,75 | 22,75 | 21,75 | 20,75 | 22,75 |
| Silan 2201 EQ | 0,5 | 0,5 | 0,5 | 0,5 | 0,5 | 0,5 | 0,5 |
| o-Hydroxybenzylalkohol | | | 2 | 4 | 6 | 8 | |
| p-Hydroxybenzylalkohol | | | | | | | 4 |

**Tabelle 2 (Zahlenangaben bedeuten Gew. %)**

| | Vergleich | erfindungsgemäß | | | | |
|---|---|---|---|---|---|---|
| | A2 | B 7 | B 8 | B 9 | B 10 | B 11 |
| ECOCURE 370/5 PART 1 | 100 | 98 | 96 | 94 | 92 | 96 |
| o-Hydroxybenzylalkohol | | 2 | 4 | 6 | 8 | |
| p-Hydroxybenzylalkohol | | | | | | 4 |

### Bestimmung der Festigkeiten in N/cm²

In einem Hobart Mischer wurde eine Sandmischung aus Quarzsand H 32, plus 0,60% der oben genannten Binderzusammensetzungen (jeweils einzeln für die Beispiele A1 bis B11) und 0,60% ISOCYANAT KOMPONENTE homogen über 2 Minuten vermischt.

Diese Sandmischung wurde in eine Kernschießmaschine Modell Roeper H 1 überführt und es wurden jeweils zwei Kerne mit einer Dimension (I x b x h) von 220mm x 22,4mm x 22,4mm mit einem Schießdruck von 4 bar mittels Druckluft in die Form gebracht. Mittels KATALYSATOR 706 (0,5 ml, Begasungszeit 10 sec bei 2 bar Spüldruck) wurde der Sand ausgehärtet. Nach dem Aushärten wurde der Kern entnommen und mit einem Multiserw Biegegerät die Festigkeit nach 15 Sekunden bzw. nach 30 Sekunden bestimmt.

Zur Ermittlung der Heißfestigkeit, wurde ein 10 Minuten alter Kern in die Schlichte MIRATEC DC 3 für 4 sec getaucht und für 30 Minuten bei 150°C in einem Umlufttrockenofen getrocknet. Nach 30 Minuten bei 150°C wurde der Kern entnommen und unmittelbar heiß im Multiserw Gerät die Biegefestigkeit bestimmt.
Biegefestigkeiten in N/cm²

**Tabelle 3 zeigt die ermittelten Biegefestigkeiten in N/cm²**

| | Vergleich | erfindungsgemäß | | | | | |
|---|---|---|---|---|---|---|---|
| | A1 | B1 | B2 | B3 | B4 | B5 | B6 |
| sofort 15 sec | 92 | 96 | 107 | 117 | 132 | 144 | 127 |
| sofort 30 sec | 100 | 105 | 111 | 126 | 141 | 160 | 137 |
| Heißfestigkeit | 95 | 142 | 167 | 154 | 170 | 169 | 173 |

**Tabelle 4 zeigt die ermittelten Biegefestigkeiten in N/cm² am Beispiel des ECOCURE 370/5 PART 1**

| | Vergleich | erfindungsgemäß | | | | |
|---|---|---|---|---|---|---|
| | A2 | B7 | B8 | B9 | B10 | B11 |
| sofort 15 sec | 98 | 108 | 115 | 122 | 132 | 114 |
| sofort 30 sec | 103 | 114 | 124 | 143 | 144 | 124 |
| Heißfestigkeit | 102 | 131 | 136 | 148 | 121 | 146 |

Beide Ergebnistabellen zeigen, dass der Zusatz von o-Hydroxybenzylalkohol oder p-Hydroxybenzylalkohol die Sofort- und Heißfestigkeiten steigern. Ein annähernd gleiches Verhältnis freies Phenol zu freiem Saligenin (jeweils A1 und A2) zeigt geringere Sofort- und Heißfestigkeiten.

## Patentansprüche

1. Phenolharz vom Benzylethertyp, wobei
das Phenolharz vom Benzylethertyp durch eines oder beide der nachfolgenden Merkmale gekennzeichnet ist:
a) das Phenolharz vom Benzylethertyp enthält freies Phenol und freien Hydroxybenzylalkohol und das Gewichtsverhältnis von freiem Phenol zu freiem Hydroxybenzylalkohol beträgt 1 zu größer als 1,2;
b) das Phenolharz vom Benzylethertyp enthält freies Phenol und freies Saligenin und das Gewichtsverhältnis von freiem Phenol zu freiem Saligenin beträgt 1 zu größer als 1,1.

2. Phenolharz vom Benzylethertyp nach Anspruch 1, wobei das Gewichtsverhältnis von freiem Phenol zu freiem Hydroxybenzylalkohol
• 1 zu größer als 1,2 bis 1 zu 30,
• bevorzugt 1 zu 1,3 bis 1 zu 20 und
• besonders bevorzugt 1 zu 1,6 bis 1 zu 15 und
• ganz besonders bevorzugt 1 zu 1,8 bis 1 zu 13
beträgt.

3. Phenolharz vom Benzylethertyp nach zumindest einem der vorhergehenden Ansprüche, wobei das Gewichtsverhältnis von freiem Phenol zu freiem Saligenin (o-Hydroxybenzylalkohol)
• 1 zu größer als 1,1 bis 1 zu 25,
• bevorzugt 1 zu 1,2 bis 1 zu 15 und
• besonders bevorzugt 1 zu 1,5 bis 1 zu 10
• ganz besonders bevorzugt 1 zu 1,8 bis 1 zu 8
beträgt.

4. Phenolharz vom Benzylethertyp nach zumindest einem der vorhergehenden Ansprüche, wobei das Phenolharz vom Benzylethertyp, bezogen auf das Gewicht, kleiner als 2,5 Gew.% freies Phenol enthält, vorzugsweise kleiner als 2 Gew.%.

5. Phenolharz vom Benzylethertyp nach zumindest einem der vorhergehenden Ansprüche, wobei das Phenolharz vom Benzylethertyp neben freiem Phenol weiterhin freies Kresol und/oder Cardanol und/oder Cardol enthält.

6. Phenolharz vom Benzylethertyp nach zumindest einem der vorhergehenden Ansprüche, wobei das Phenolharz vom Benzylethertyp eine OH-Zahl nach DIN 53240 von 500 bis 900 mg KOH/g, vorzugsweise von 550 bis 850 mg KOH/g und insbesondere bevorzugt von 560 bis 750 mg KOH/g aufweist.

7. Phenolharz vom Benzylethertyp nach zumindest einem der vorhergehenden Ansprüche, wobei das Phenolharz vom Benzylethertyp ein mittleres Molekulargewicht (Gewichtsmittel nach DIN 5567-1 mittels GPC) von 500 bis 1100 g/mol und insbesondere 550 bis 1000 g/mol und insbesondere bevorzugt von 560 bis 980 g/mol aufweist, ohne Phenol und monomere Additionsprodukte.

8. Bindemittel zum Aushärten von Formstoffmischungen aufweisend zumindest:
- eine Polyol-Komponente, wobei die Polyol-Komponente ein Phenolharz vom Benzylethertyp nach zumindest einem der vorhergehenden Ansprüche ist;
- eine Isocyanat-Komponente aus einem oder mehreren Isocyanat-Verbindungen mit zumindest 2 Isocyanat-Gruppen pro Molekül.

9. Bindemittel nach Anspruch 8, wobei das Lösungsmittel für die Polyolkomponente Dicarbonsäureester und/oder Fettsäureester und vorzugsweise kleiner 10 Gew.% aromatische Lösungsmittel enthält.

10. Bindemittel nach zumindest einem der Ansprüche 8 oder 9, wobei das Bindemittel als Kit vorliegt umfassend getrennt voneinander die Isocyanat-Verbindungen als eine Komponente und das Phenolharz vom Benzylethertyp als weitere Komponente.

11. Bindemittel nach zumindest einem der Ansprüche 8 bis 10, wobei das Bindemittel enthält
- 8 bis 70 Gew.%, insbesondere 10 bis 62 Gew.%, Phenolharz vom Benzylethertyp;
- 13 bis 78 Gew.%, insbesondere 17 bis 70 Gew.%, Isocyanat-Verbindungen; und
- 2 bis 57 Gew.%, insbesondere 3 bis 53 Gew.%, Lösungsmittel für das Phenolharz vom Benzylethertyp und die Isocyanat-Verbindungen.

12. Formstoffmischung enthaltend zumindest:
- einen feuerfesten Formgrundstoff;
und das Bindemittel nach zumindest einem der Ansprüche 8 bis 11.

13. Formstoffmischung nach Anspruch 12, wobei der feuerfeste Formgrundstoff ausgewählt ist aus einem oder mehreren Mitgliedern der Gruppe Olivin, Schamotte, Bauxit, Aluminiumsilikathohlkugeln, Glasperlen, Glasgranulat, synthetischen keramischen Formgrundstoffen und Siliciumdioxid, insbesondere in der Form von Quarzsand, Zirkonsand oder Chromerzsand.

14. Verfahren zur Herstellung eines Formkörpers als Gießform oder als Kern, umfassend
(i) Herstellen der Formstoffmischung gemäß einem der Ansprüche 12 oder 13;
(ii) Einbringen der Formstoffmischung oder deren Bestandteile in ein Formwerkzeug;
(iii) Härten der Formstoffmischung in dem Formwerkzeug mit zumindest einem tertiären Amin, um eine selbsttragende Formkörper zu erhalten; und
(iv) anschließendes Trennen der gehärteten Form vom Werkzeug und ggf. weiteres Härten, wodurch man einen ausgehärteten Formkörper erhält.

15. Verfahren nach Anspruch 14, wobei zur Herstellung der Formstoffmischung das Bindemittel als Kit eingesetzt wird umfassend getrennt voneinander zumindest die Isocyanat-Verbindungen als eine Komponente und zumindest das Phenolharzvom Benzylethertyp als weitere Komponente.

16. Verfahren nach Anspruch 14 oder 15 , wobei das tertiäre Amine ausgewählt ist aus einem oder mehreren Mitgliedern aus der Gruppe: Trimethylamin (TMA), Dimethylethylamin (DMEA), Dimethyl-n-propylamin (DMPA), Dimethyl-iso-propylamin (DMIPA), Diethylmethylamin (DEMA), Triethylamin (TEA), Tri-n-propylamin, Tri-isopropylamin, Tri-n-butylamin, Tri-isobutylamin, 4-(C1-C4-Alkyl)pyridine wie Tris(3-dimethylamino)propylamin, Isochinolin, Arylpyridine wie Phenylpyridin, Pyridin, Acridin, 2-Methoxypyridin, Pyridazin, 3-Chloropyridin, Chinolin, N-Methylimidazol, N-Ethylimidazol, 4,4'-Dipyridin, 4- Phenylpropylpyridin, 1-Methylbenzimidazol und 1,4-Thiazin.
